# FASCICULE DE BREVET EUROPEEN

(11) **EP 2 655 977 B1**
(45) Date de publication et mention de la délivrance du brevet: **20.04.2016**
(21) Numéro de dépôt: 11802064.3
(22) Date de dépôt: 16.12.2011
(51) Int. Cl.: F24D 3/10, F24D 11/00, F24D 17/00, F24D 19/00

(54) **SYSTÈME DE PRODUCTION D'EAU CHAUDE SANITAIRE À L'AIDE DE CAPTEURS SOLAIRES THERMIQUES À EAU, DANS LEQUEL UN MÊME CIRCUIT MET EN RELATION UN BALLON D'EAU CHAUDE ET LES CAPTEURS**
VORRICHTUNG ZUR ERZEUGUNG VOM SANITÄRWARMWASSER DURCH DIE VERWENDUNG VON THERMISCHEN SOLARKOLLEKTOREN MIT WASSER ALS BETRIEBSFLÜSSIGKEIT, DIE DIREKT MIT EINEM WARWASSERSPEICHER VERBUNDEN SIND.
DEVICE FOR PRODUCING SANITARY HOT WATER BY MEANS OF WATER SOLAR COLLECTORS DIRECTLY CONNECTED TO A HOT WATER RESERVOIR

(30) Priorité: 21.12.2010 FR 1004991; 25.02.2011 FR 1151535
(43) Date de publication de la demande: 30.10.2013
(73) Titulaire: Thomere Finance, 44160 Sainte-Anne-sur-Brivet (FR)
(72) Inventeur: THOMERE, Yannick, F-44160 Sainte-Anne-sur-Brivet (FR); THOMERE, Frédéric, F-44170 Nozay (FR)
(74) Mandataire: Vidon Brevets & Stratégie
(86) Numéro de dépôt international: PCT/EP2011/073145
(87) Numéro de publication internationale: WO 2012/084748

(56) Documents cités:
- DE-A1- 4 318 480
- DE-A1- 19 851 919
- FR-A1- 2 562 982
- JP-A- 60 004 761
- US-A- 4 531 510

## Description

Le domaine de l'invention est celui de la conception, de la fabrication et de l'installation des équipements pour la production d'eau chaude sanitaire. Plus précisément, l'invention concerne un système de production d'eau chaude sanitaire utilisant un ou plusieurs capteurs solaires thermiques à eau destinés à alimenter en eau chaude un ballon de stockage d'eau chaude, lui-même susceptible d'alimenter un réseau.

L'invention s'applique tant aux installations situées dans des bâtiments ou des sites résidentiels, qu'à des sites tertiaires, industriels ou agricoles.

Dans les systèmes de production d'eau chaude sanitaire mettant en oeuvre des capteurs solaires thermiques, il est classique de concevoir l'installation avec un circuit appelé « primaire » et un circuit appelé « secondaire ». Une telle configuration d'installation permet de séparer du liquide circulant dans le circuit primaire (et circulant par conséquent dans les capteurs solaires) de l'eau chaude sanitaire utilisée dans le réseau alimenté par le ballon d'eau chaude (ou tout autre réservoir de stockage).

Une telle installation contient alors un échangeur de chaleur qui isole les deux fluides et permet le transfert de calories du liquide circulant dans le circuit primaire vers celui circulant dans le secondaire, à savoir l'eau chaude sanitaire.

Cet échangeur de chaleur, classiquement sous forme de serpentin se trouve généralement à l'intérieur d'un ballon de stockage d'eau chaude sanitaire, le serpentin étant traditionnellement placé au fond du ballon. L'échangeur restitue la chaleur à l'eau froide du circuit secondaire, en partie basse du ballon, l'eau au contact de l'échangeur se réchauffant et se dispersant dans tout le ballon.

L'échangeur, du côté du circuit primaire, utilise un fluide caloporteur. Ce fluide est généralement composé d'un mélange de monopropylène glycol dilué dans de l'eau, permettant de se prémunir de la formation de glace dans le circuit, en cas de conditions climatiques tendant à la formation de gel. Outre le ou les capteurs solaires (placés le plus souvent en toiture de bâtiment), le circuit primaire contient un circulateur ou une pompe, des vannes et différents accessoires, ainsi qu'un vase d'expansion qui préserve des rejets de fluide caloporteur en cas de surchauffe, ainsi qu'une soupape de sécurité qui assure l'intégrité du système.

Pour compléter le système, différents composants peuvent être ajoutés, tel qu'un échangeur complémentaire intégré au ballon, une régulation, ou un dispositif de chauffage d'appoint.

La technique de production d'eau chaude sanitaire par l'intermédiaire des capteurs solaires thermiques est de plus en plus répandue.

Toutefois, les solutions existantes s'inscrivant dans cette approche présentent un certain nombre d'inconvénients.

En premier lieu, un inconvénient majeur réside dans le fait de devoir recourir à un fluide caloporteur additionné d'un produit anti-gel dans le circuit primaire. En effet, de par ses propriétés physico-chimiques, le fluide caloporteur additionné du produit anti-gel présente, comparativement à l'eau claire, les inconvénients suivants :
- il diminue les capacités calorifiques de l'installation, et donc le rendement de l'installation ;
- il circule plus difficilement dans les canalisations (viscosité plus importante) et donc génère une consommation électrique plus importante du circulateur ;
- il tend à polluer l'eau chaude pouvant être consommée, ceci en particulier en cas de perforation de l'échangeur ;
- il subit un vieillissement précoce, lié principalement aux surchauffes qui provoquent une perte de ses propriétés initiales, nécessitant éventuellement des opérations de maintenance pour renouveler le fluide du circuit primaire.

Un deuxième inconvénient réside dans l'utilisation d'un échangeur entre le circuit primaire et le circuit secondaire. En effet, cet échangeur doit correctement être dimensionné en fonction de :
- la puissance calorifique attendue ;
- la pression manométrique disponible ;
- le débit hydraulique ;
- le volume de stockage ;
- la température d'eau chaude souhaitée.

Un troisième inconvénient est lié au chauffage de l'eau par le phénomène physique de stratification de l'eau chaude dans le ballon de stockage. En effet, en règle générale, les ballons des installations à capteurs solaires sont équipés d'un ou de plusieurs échangeurs placés à l'intérieur du ballon. Ce ou ces échangeurs sont positionnés en partie basse afin d'avoir un échange optimisé et un rendement maximum. Selon ce phénomène physique, la température de l'eau chaude au niveau de l'échangeur se propage par convection dans le ballon. La température d'eau du ballon s'élève tout en restant très homogène dans l'enceinte. Un tel phénomène est relativement lent, et il faut par conséquent des heures de chauffage avant d'obtenir une température d'eau suffisante pour les usages courants (environ 60°C).

Un quatrième inconvénient est lié au fait que, lorsqu'on installe un système de production d'eau chaude sanitaire à l'aide des capteurs solaires, il faut remplacer le ballon de stockage de l'installation existante par un ballon de stockage solaire, voire ajouter un ballon de stockage solaire. Bien entendu, le fait de rajouter ou de remplacer un ballon existant conduit à une dépense importante (liée au coût du ballon et à son installation), ce qui diminue la rentabilité de l'opération. En outre, ceci conduit à mettre des équipements au rebut, impliquant un volume de déchets important.

Dernièrement, des installations ont tenté d'optimiser le principe de production d'eau chaude sanitaire à l'aide de capteurs solaires, ceci en appliquant un chargement en stratification du ballon de stockage, ceci pour permettre d'utiliser l'énergie solaire produite beaucoup plus rapidement que les systèmes solaires classiques.

Dans ce type récent d'installation, l'échangeur est situé à l'extérieur du ballon de stockage. L'eau chauffée est introduite dans la partie supérieure du ballon de stockage. Il s'établit donc une stratification de l'eau dans le haut du ballon de stockage, niveau auquel l'eau chaude est immédiatement disponible.

Toutefois, ces techniques nécessitent le recours à un ballon de stockage spécifique, donc coûteux.

On connaît en particulier le système décrit par le document de brevet publié sous le numéro WO-2008 043573, selon lequel le système comprend un échangeur assurant un transfert de chaleur par convection entre les capteurs solaires et le réservoir de stockage d'eau chaude, l'échangeur prenant la forme d'un réservoir à double enveloppe placé dans un bouteillon vertical. Dans cette double enveloppe circule le fluide primaire issu des capteurs solaires. Autour de cette double enveloppe circule l'eau sanitaire. Le transfert de la chaleur se réalise par convection à l'eau contenue dans le bouteillon. Le chargement en stratification de l'eau chaude vers le réservoir principal de stockage se réalise par thermosiphon au travers d'une tuyauterie raccordée au point haut du réservoir.

Selon cette technique, l'amorçage du thermosiphon nécessite de raccorder la sortie d'eau chaude de l'échangeur à une hauteur minimale (de 500 mm) au-dessus du ballon, ce qui est préjudiciable en termes d'encombrement. Cette technique ne peut pas être mise en oeuvre sur tous les types de ballons d'eau chaude sanitaire proposés sur le marché. En particulier, sur les ballons traditionnels électriques ayant des tubes plongeurs (eau chaude et eau froide) pénétrant le fond inférieur du réservoir.

De plus, le transfert de chaleur entre le fluide primaire et le fluide secondaire s'opère par conduction et convection. Dans la pratique, l'efficacité d'un tel échangeur est relativement limitée. La température de l'eau chaude secondaire en sortie de l'échangeur est donc sensiblement inférieure à la température d'entrée du fluide primaire issue des capteurs solaires. Or, une stratification optimisée nécessite une température d'eau chaude la plus élevée possible, idéalement celle des capteurs solaires.

En outre, une telle technique conserve le recours à un circuit primaire et un circuit secondaire, le fluide circulant dans le circuit primaire comprenant un produit anti-gel qui entraîne les inconvénients déjà cités précédemment.

L'invention a notamment pour objectif de pallier ces inconvénients de l'art antérieur.

Plus précisément, l'invention a pour objectif de proposer une installation de chauffage d'eau sanitaire à l'aide de capteurs solaires thermiques à eau, qui soit plus rapide à produire de l'eau chaude sanitaire comparée aux solutions de l'art antérieur.

En ce sens, l'invention a pour objectif de fournir une telle installation qui augmente l'efficacité du transfert de chaleur et qui produit donc de l'eau sanitaire à plus haute température, améliorant la stratification dans le ballon de stockage.

L'invention a également pour objectif de fournir une telle installation qui s'affranchit du recours à un fluide caloporteur comprenant un additif anti-gel, selon l'example de US 4,531,610.

L'invention a aussi pour objectif de fournir une telle installation qui ne nécessite pas de ballon de stockage spécifique et qui peut, en d'autres termes, être installé en utilisant un ballon d'eau chaude existant.

Ces objectifs, ainsi que d'autres qui apparaîtront par la suite, sont atteints grâce à l'invention qui a pour objet un système de production d'eau chaude, comprenant :
- au moins un capteur solaire thermique à eau ;
- au moins un ballon d'eau chaude ;
- des moyens intermédiaire reliés d'une part audit ou auxdits capteurs solaires et, d'autre part, audit ballon d'eau chaude de façon à alimenter ledit ballon en eau chaude,
   les moyens intermédiaires comprenant une chambre délimitant un volume mettant en communication au moins quatre conduits :
   - un premier conduit de départ d'eau vers le ballon d'eau chaude, débouchant en partie supérieure de ladite chambre ;
   - un deuxième conduit d'arrivée d'eau, débouchant en partie inférieure de ladite chambre ;
   - un troisième conduit d'arrivée d'eau en provenance du ou des capteurs, débouchant dans une zone intermédiaire d'arrivée située entre la partie supérieure et la partie inférieure ;
   - un quatrième conduit de départ d'eau vers le ou les capteurs solaires, débouchant entre la partie inférieure et la zone intermédiaire d'arrivée.

Selon l'invention, le système de production d'eau chaude comporte un moyen mécanique de stratification comprenant une vanne thermostatique placée sur le départ du premier conduit.

Un système de production d'eau chaude sanitaire selon l'invention procure de nombreux avantages.

Tout d'abord, un système de production d'eau chaude sanitaire selon l'invention est remarquable en ce qu'il ne met pas en oeuvre la solution classique « circuit primaire/circuit secondaire ». Il en résulte que la partie de l'installation incluant les capteurs solaires thermiques est raccordée en parallèle sur la partie de l'installation incluant le ballon d'eau chaude raccordé au réseau de distribution d'eau chaude sanitaire. Il n'y a donc pas de séparation entre l'eau chaude sanitaire et l'eau des capteurs solaires. Clairement, l'eau chaude sanitaire distribuée dans le réseau circule dans toute l'installation selon l'invention, y inclus au niveau des capteurs solaires thermiques.

Par conséquent, l'ensemble de l'installation utilise la même eau dans des circuits interconnectés. Le système fonctionne sous la pression du réseau d'eau potable.

Comme cela va apparaître plus clairement par la suite, la chambre des moyens intermédiaires assure un transfert de chaleur entre la source chaude (capteurs solaires) et la source froide (ballon de stockage d'eau chaude sanitaire) plus performant (notamment plus rapide, que celui des échangeurs de chaleur traditionnels).

De plus, un système selon l'invention peut être associé à un ballon d'eau chaude traditionnel existant sur une installation à rénover.

D'autre avantages liés à la présence d'un moyen mécanique de stratification sont les suivants :
- la stratification dans le ballon ne se réalise qu'à des niveaux de température élevés ;
- les trains d'eau froide dans la chambre, pouvant provenir par exemple d'un sous-tirage sur l'installation de distribution d'eau chaude sanitaire, sont stoppés.

Selon une solution préférentielle, ledit ballon présente une extrémité supérieure et ledit premier conduit s'étend au-dessus de l'extrémité supérieure du ballon d'eau chaude et est relié à celle-ci.

De plus, ledit ballon présente avantageusement un conduit d'alimentation en eau chaude d'un réseau, ledit conduit s'étendant à partir de l'extrémité supérieure.

Avantageusement, le ballon d'eau chaude présente une extrémité inférieure, et le deuxième conduit communique avec ladite extrémité inférieure du ballon.

Ces caractéristiques procurent à l'installation une configuration selon laquelle :
- la sortie de l'eau chauffée se fait en partie haute de la chambre de chauffage de fluide, au niveau "haute température" (l'alimentation en eau de l'installation se faisant en partie basse de la chambre, au niveau "basse température") ;
- lorsque le circuit solaire est en fonctionnement, l'eau chauffée dans la chambre s'élève dans la partie supérieure et sort de la chambre (un volume d'eau froide équivalent étant alors aspiré dans la partie inférieure de la chambre) ;
- la mise en mouvement de l'eau entre la chambre et le ballon de stockage est générée par un thermosiphon ; en effet, la variation de la masse volumique de l'eau en fonction de la température de la chambre créée une circulation naturelle de l'eau vers le ballon de stockage.

Il en résulte que le fluide chauffé sort naturellement de la chambre et est amené, via le premier conduit dans la partie supérieure du ballon de stockage d'eau chaude sanitaire. La stratification s'établit de façon immédiate dans le ballon d'eau chaude, à partir du haut de celui-ci.

De plus, le conduit d'alimentation en eau chaude du réseau s'étend à partir de l'extrémité haute du ballon d'eau chaude, c'est-à-dire à partir d'une zone du ballon dans laquelle l'eau chaude est immédiatement disponible.

On note que la performance du système selon l'invention peut encore être améliorée, ceci en réglant le débit d'eau du thermosiphon par une vanne de réglage placée sur le deuxième conduit. La température de stratification dans le ballon est ainsi contrôlée.

On améliore encore le système en réglant le débit d'eau du circulateur de telle sorte que le débit d'eau véhiculé soit faible, ce qui conduit à augmenter la température en sortie de capteurs solaires. Le diamètre de tuyauterie peut alors être sensiblement réduit.

Il en résulte que la quantité d'eau dans le circuit solaire étant réduite, l'inertie du système est faible. La température de l'eau dans les capteurs solaires s'élève d'autant plus rapidement. Au moindre apport solaire, le thermosiphon s'amorce et permet de produire de l'eau chaude sanitaire immédiatement disponible.

Selon une première variante envisageable, le troisième conduit et/ou le quatrième conduit pénètre dans ladite chambre en partie supérieure de celle-ci.

Selon une deuxième variante envisageable, le troisième conduit et/ou le quatrième conduit pénètre dans ladite chambre en partie inférieure de celle-ci.

Il apparaît donc que la chambre peut présenter différentes configurations, ceci tout en restant dans le respect du principe de l'invention énoncé précédemment.

Selon une autre caractéristique de l'invention, ledit troisième conduit et ledit quatrième conduit sont reliés par un circuit passant par ledit ou lesdits capteurs, ledit circuit incluant des moyens mécaniques anti-gel destinés à éviter la formation de glace dans ledit circuit.

Le système selon l'invention s'inscrit de cette façon clairement dans une approche visant :
- premièrement, à supprimer la conception classique « circuit primaire/circuit secondaire » ;
- deuxièmement, à s'affranchir du recours à un fluide caloporteur comprenant un additif anti-gel susceptible d'engendrer de nombreux inconvénients (rappelés précédemment).

Tel qu'indiqué précédemment, c'est l'eau chaude sanitaire distribuée qui circule dans l'ensemble du système selon l'invention.

L'invention propose donc une solution de production d'eau chaude qui s'avère moins coûteuse, moins polluante et thermiquement plus performante que les systèmes utilisant une solution anti-gel.

Selon une solution avantageuse, les moyens mécaniques anti-gel intègrent des moyens de vidange du circuit activés à une température susceptible d'engendrer un état solide de l'eau.

Un système anti-gel configuré de cette façon constitue alors une sécurité « ultime » en mode de fonctionnement dégradé, c'est-à-dire lorsque le circulateur est hors service (ceci en raison d'une panne mécanique ou électrique).

Un tel système anti-gel est donc destiné à éviter la détérioration du circuit hydraulique sous l'effet du gel. Il est placé en série sur le réseau hydraulique du côté des capteurs solaires thermiques de l'installation, ceci de préférence au plus proche des éléments les plus exposés aux températures froides. Ce système est donc destiné à être placé à l'extérieur, proche des capteurs, sur le quatrième conduit.

Comme cela va être expliqué plus en détails par la suite, le but est de remplacer l'eau du circuit atteignant une température critique par de l'eau à température plus élevée, provenant du deuxième conduit, ceci sans perte de pression.

Avantageusement, lesdits moyens mécaniques anti-gel comprennent au moins un purgeur thermostatique étant préférentiellement porté par un découpleur thermique.

D'autres caractéristiques et avantages de l'invention apparaîtront plus clairement à la lecture de la description suivante d'un mode de réalisation préférentiel de l'invention, et de plusieurs de ses variantes, donnés à titre de simples exemples illustratifs et non limitatifs, et des dessins annexés parmi lesquels :
- la figure 1 est une représentation schématique d'un système de production d'eau chaude sanitaire selon un mode de réalisation de l'invention ;
- la figure 2 est une représentation schématique d'une chambre d'un système de production d'eau chaude sanitaire selon l'invention ;
- les figures 3 à 9 sont chacune une illustration schématique d'une variante de réalisation d'une chambre d'un système de production d'eau chaude sanitaire selon l'invention ;
- la figure 10 est une représentation schématique des moyens mécaniques anti-gel destinés à équiper un système de production d'eau chaude sanitaire selon l'invention.

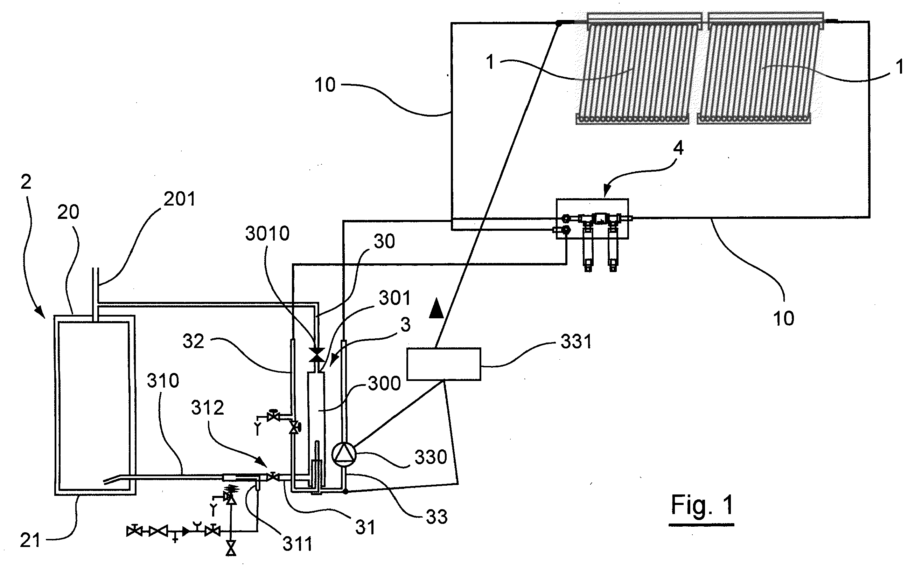

En référence à la figure 1, un système de production d'eau chaude sanitaire selon l'invention comprend :
- au moins un capteur solaire thermique à eau 1 (en l'occurrence deux) constitué ici par des capteurs solaires à tube ;
- au moins un ballon 2 de stockage d'eau chaude sanitaire ;
- des moyens intermédiaires, décrits plus en détails par la suite, reliés d'une part aux capteurs solaires thermiques 1 et, d'autre part, au ballon 2 de stockage d'eau chaude sanitaire, ces moyens intermédiaires étant aptes à alimenter le ballon 2 en eau chaude à l'aide de l'action des capteurs solaires thermiques.

Selon le principe de l'invention, les moyens intermédiaires comprennent une chambre 3 délimitant un volume 300 mettant en communication quatre conduits :
- un premier conduit 30 de départ d'eau vers le ballon 2 de stockage d'eau chaude sanitaire ;
- un deuxième conduit 31 d'arrivée d'eau ;
- un troisième conduit 32 d'arrivée d'eau en provenance des capteurs 1 ;
- un quatrième conduit 33 de départ d'eau vers les capteurs solaires thermiques 1.

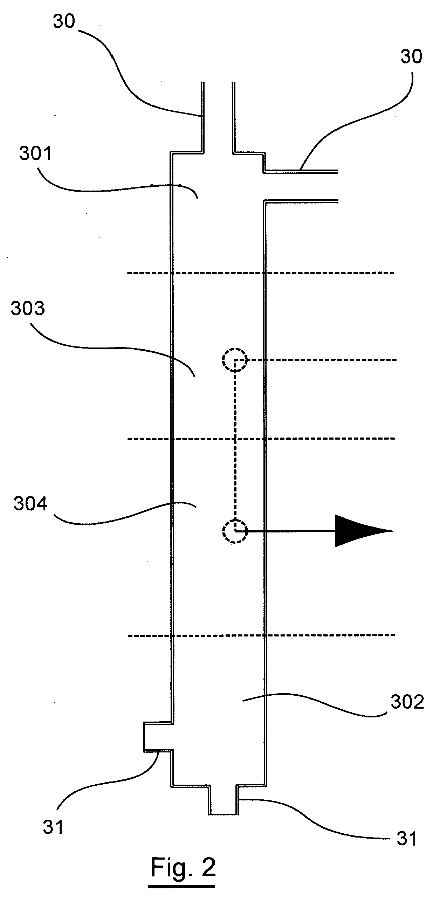

Tel qu'illustré par la figure 2, la chambre 3 est configurée de la façon suivante :
- le premier conduit 30 de départ d'eau vers le ballon d'eau chaude débouche dans une partie supérieure 301 de la chambre, que ce soit longitudinalement ou latéralement par rapport à la façon dont s'étend la chambre (les deux variantes étant illustrées sur la figure 2) ;
- le deuxième conduit 31 d'arrivée d'eau débouche dans une partie inférieure 302, constituant une zone d'eau froide de la chambre, le conduit 31 amenant l'eau sanitaire à chauffer en provenance notamment du ballon 2 ;

- le troisième conduit 32 d'arrivée d'eau en provenance des capteurs solaires thermiques débouche dans une zone intermédiaire 303 située entre la partie supérieure 301 et la partie inférieure 302 ;
- un quatrième conduit 33 de départ d'eau vers les capteurs solaires thermiques, débouchant dans une deuxième zone intermédiaire 304, située entre la partie inférieure 302 et la zone 303 intermédiaire d'arrivée d'eau en provenance des capteurs.

Selon le principe de l'invention, on comprend que les différentes zones 301, 302, 303, 304 de la chambre communiquent entre elles pour constituer le volume global 300 indiqué précédemment.

On note que, tel que cela apparaît clairement sur les figures 1 à 9, la chambre est constituée par un corps allongé s'étendant verticalement, par exemple de forme cylindrique, dont la dimension en hauteur est prévue pour assurer un compromis entre l'éloignement nécessaire entre la partie supérieure et la partie inférieure de la chambre, et un temps réduit de stratification entre la partie supérieure et la partie inférieure de la chambre.

A titre indicatif, une telle chambre présente une dimension en hauteur de 120mm à 600mm pour un diamètre de la chambre de 30 à 60mm en fonction de la puissance.

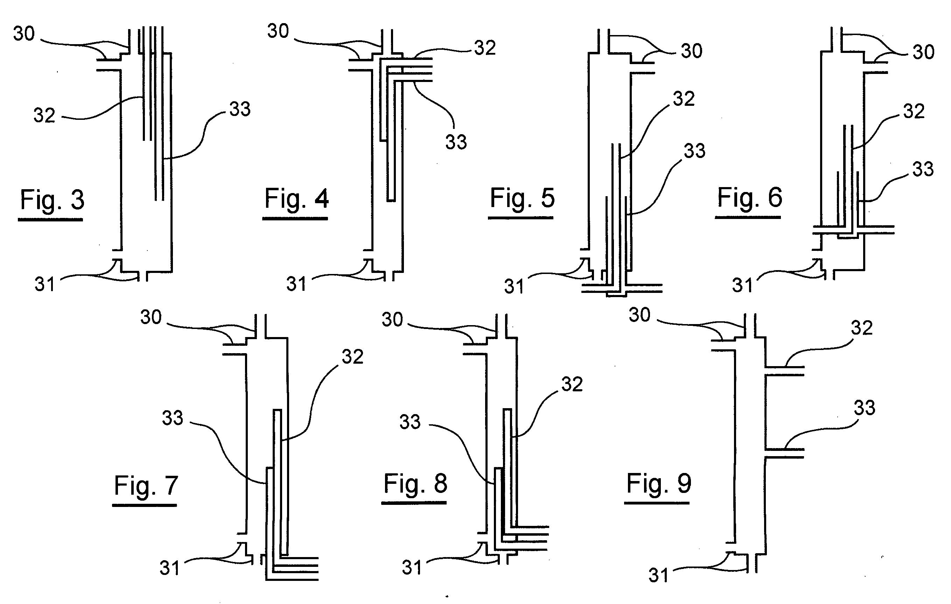

Différentes configurations de la chambre, illustrées par les figures 3 à 9 sont envisageables, à savoir :
- le troisième conduit 32 et le quatrième conduit 33 pénètrent par l'extrémité supérieure de la chambre dans le volume de celle-ci, dans une direction parallèle à l'axe longitudinal de la chambre, le conduit 33 se prolongeant jusqu'à un niveau inférieur à l'extrémité inférieure du troisième conduit 32 (figure 3) ;
- le troisième conduit 32 et le quatrième conduit 33 pénètrent tous deux en partie supérieure de la chambre, en pénétrant dans la chambre selon une direction perpendiculaire à l'axe longitudinal de la chambre, puis s'étendent parallèlement à l'axe longitudinal de la chambre, le conduit 33 s'étendant jusqu'à un niveau inférieur à l'extrémité inférieure du troisième conduit 32 (figure 4) ;
- le troisième conduit 32 et le quatrième conduit 33 pénètrent tous deux par l'extrémité inférieure de la chambre, selon une direction parallèle à l'axe longitudinal de la chambre, le troisième conduit 32 s'étendant partiellement à l'intérieur du quatrième conduit 33 (les deux conduits étant coaxiaux), le troisième conduit 32 se prolongeant au-dessus de l'extrémité supérieure du quatrième conduit 33 (figure 5) ;
- le troisième conduit 32 et le quatrième conduit 33 pénètrent en partie basse de la chambre, en s'étendant selon une direction transversale à l'axe longitudinal de la chambre, puis se rejoignent de telle sorte que le troisième conduit 32 pénètre à l'intérieur du quatrième conduit 33, de façon à s'étendre ensuite tous deux verticalement, les deux conduits étant coaxiaux et le troisième conduit 32 se prolongeant à l'extérieur du quatrième conduit 33 de façon à présenter dans la chambre une extrémité supérieure à un niveau supérieure à l'extrémité supérieure du quatrième conduit 33 (figure 6) ;
- le troisième conduit 32 et le quatrième conduit 33 pénètrent l'un à côté de l'autre, selon une direction parallèle à l'axe longitudinal de la chambre (figure 7) ;
- le troisième conduit 32 et le quatrième conduit 33 pénètrent l'un à côté de l'autre dans la chambre, en s'étendant selon une direction transversale à l'axe longitudinal de la chambre, puis s'étendent verticalement à l'intérieure de la chambre (figure 8) ;
- le troisième conduit 32 s'étend horizontalement et débouche dans la paroi de la chambre, le quatrième conduit 33 s'étendant horizontalement et débouchant également dans la paroi de la chambre, à un niveau inférieur au troisième conduit (figure 9).

De plus, dans toutes les variantes qui viennent d'être décrites, on note que :
- le premier conduit 30 pénètre en partie supérieure de la chambre, en s'étendant soit selon une direction parallèle à l'axe longitudinal de la chambre, soit selon une direction transversale de l'axe longitudinal de la chambre (les deux variantes étant représentées simultanément sur chacune des figures 3 à 9) ;
- le deuxième conduit 31 pénètre en partie inférieure de la chambre, en s'étendant soit selon une direction parallèle à l'axe longitudinal de la chambre, soit selon une direction transversale à l'axe longitudinal de la chambre (les deux variantes étant représentées simultanément sur chacune des figures 3 à 9).

En tout état de cause, une chambre selon l'une ou l'autre des variantes de réalisation décrites précédemment assure le transfert de chaleur entre la source chaude (capteurs solaires thermiques) et la source froide (ballon de stockage d'eau chaude sanitaire). La chambre a donc pour fonction de séparer l'eau en trois niveaux de température de l'eau, à savoir :
- un niveau "basse température", entre les extrémités du deuxième conduit 31 et du quatrième conduit 33 débouchant dans la chambre ;
- un niveau de température de mélange, entre les extrémités du troisième conduit 32 et du quatrième conduit 33 débouchant à l'intérieur de la chambre ;
- un niveau "haute température", entre les extrémités du troisième conduit 32 et du premier conduit 30 débouchant à l'intérieur de la chambre.

Par ailleurs, tel que cela apparaît sur la figure 1, le premier conduit de départ d'eau vers le ballon d'eau chaude s'étend à partir d'une extrémité supérieure 301 de la chambre, jusqu'à un niveau à partir duquel il s'étend au-dessus de l'extrémité supérieure 20 du ballon 2, au niveau de laquelle il pénètre à l'intérieur du ballon. A partir de l'extrémité supérieure 20 du ballon 2, s'étend un conduit d'alimentation 201 en eau chaude du réseau du bâtiment desservi par le système selon l'invention.

On note que le troisième conduit 31 communique avec le ballon 2, en pénétrant dans celui-ci par l'extrémité inférieure 21 du ballon, ceci par l'intermédiaire d'une portion 310 du deuxième conduit.

De plus, un piquage 311 permet de relier le deuxième conduit 31 au réseau d'eau potable, de façon à apporter un complément en eau dans le système en cas de besoin, ceci en alimentant le ballon de façon privilégiée par un système venturi ou un élément thermostatique.

La circulation de l'eau dans le conduit 33 en direction des capteurs solaires thermiques 1, puis à partir des capteurs solaires thermiques en direction de la chambre 3, est assurée par un circulateur 330, piloté par une régulation 331.

La production d'eau chaude dans un système selon l'invention s'opère de la façon suivante.

Dans un premier temps, lors d'une phase de mise en service, le système est bien entendu mis en eau, ceci en remplissant l'ensemble du circuit allant et venant entre les capteurs solaires thermiques 1 et le ballon 2, y inclus le volume des capteurs et du ballon.

La circulation de l'eau dans le système est assurée, en fonctionnement, par le circulateur 330, piloté par la régulation 331.

Le volume d'eau mis en circulation à partir du quatrième conduit 33 partant de la chambre 3 en direction des capteurs solaires thermiques 1 correspond à un volume soit soutiré du ballon 2, par l'intermédiaire du conduit 310, soit procuré par une alimentation en eau potable du réseau par l'intermédiaire du conduit 311 connecté au deuxième conduit 31 d'arrivée d'eau dans la chambre.

L'eau suit alors un circuit 10 aller/retour par rapport à la chambre, ce circuit 10 comportant donc un aller entre la chambre et les capteurs solaires thermiques, puis un retour entre les capteurs solaires thermiques et la chambre.

En sortie des capteurs solaires thermiques, l'eau chauffée arrive dans la chambre par l'intermédiaire du troisième conduit 32.

L'eau chaude s'élève à l'intérieur de la chambre, tel que décrit précédemment.

La sortie de l'eau chauffée se fait en partie supérieure de la chambre, au niveau haute température, et part en direction du ballon 2, par l'intermédiaire du premier conduit 30. Un volume d'eau froide équivalent est alors aspiré dans la partie inférieure de la chambre.

La mise en mouvement de l'eau entre la chambre 3 et le ballon 2 de stockage d'eau chaude sanitaire est générée par un phénomène physique de thermosiphon connu de l'homme du métier. En effet, la variation de la masse volumique de l'eau en fonction de la température dans la chambre créée une circulation naturelle de l'eau vers le ballon 2.

L'eau chauffée sort donc naturellement de la chambre 3, par l'intermédiaire du premier conduit 30, et est conduite jusqu'à la partie supérieure 20 du ballon 2 de stockage d'eau chaude sanitaire. Il s'établit alors une stratification immédiate de l'eau dans la partie supérieure du ballon 2.

Le débit de l'eau généré par le phénomène de thermosiphon est préférentiellement contrôlé à l'aide d'une vanne de réglage 312 placée à l'entrée « eau froide » de la chambre. En contrôlant ce débit, la température de stratification dans le ballon est également contrôlée.

Afin d'augmenter la température en sortie des capteurs solaires thermiques, le débit d'eau véhiculée par le circulateur est préférentiellement faible. Le diamètre des tuyauteries est alors sensiblement réduit.

On note que le système décrit ne comprend pas de vase d'expansion destiné à compenser la dilatation de l'eau. Il en résulte une montée en pression dans le circuit jusqu'à l'ouverture de la soupape d'un groupe de sécurité du ballon à sa pression de tarage. L'excédent d'eau évacué lors de la montée en pression est compensé naturellement par des appoints d'eau froide lors de la réduction de température du circuit.

De plus, le système fonctionne aussi avec des ballons équipés de tubes plongeurs eau froide et eau chaude en partie inférieure.

Par ailleurs, pour optimiser la charge hydro-motrice et donc favoriser la mise en mouvement de l'eau :
- le bas de la chambre est préférentiellement à un niveau inférieur ou égal au point d'entrée d'eau froide dans le ballon de stockage ;
- et le haut de la chambre est préférentiellement à un niveau inférieur au point de puisage d'eau chaude dans le ballon de stockage.

Selon l'invention, un moyen mécanique constitué d'une vanne thermostatique 3010 assure le passage ou non de l'eau dans le ballon. Cette vanne est placée sur le départ du conduit 30 et au point haut de la partie 301 de la chambre.

Cette vanne thermostatique 3010 permet d'optimiser la stratification dans le ballon 2, l'eau entre la chambre 3 et le ballon 2 étant mise en mouvement si et seulement si la température dans la partie 301 de la chambre est suffisante, idéalement 50°C.

La vanne thermostatique 3010 est normalement fermée pour une température inférieure à 50°C dans la partie 301 de la chambre. Elle est totalement ouverte pour une température supérieure à 60°C.

L'ouverture de la vanne thermostatique, entraîne l'amorçage du thermosiphon.

Les avantages sont les suivants :
- la stratification dans le ballon ne se réalise qu'à des niveaux de température élevés
- les trains d'eau froide dans la chambre, pouvant provenir par exemple d'un sous tirage sur l'installation de distribution d'eau chaude sanitaire, sont stoppés.

Le fonctionnement des moyens mécaniques de stratification est le suivant :
- sous l'effet d'une température d'eau dans la partie 301 de la chambre proche de 50°C, la vanne thermostatique 3010 commence à s'ouvrir ;
- le thermosiphon s'amorce ;
- l'eau chaude s'évacuant de la chambre est immédiatement remplacée par de l'eau froide provenant du ballon ;
- la vanne thermostatique est totalement ouverte sous l'effet d'une température d'eau dans la partie 301 de la chambre proche de 60°C ;
- si de l'eau dans la partie 301 de la chambre arrive à une température inférieure à 50°C alors la vanne thermostatique se ferme.

Par ailleurs, selon une autre caractéristique de l'invention, le système inclut des moyens mécaniques anti-gel 4.

Tel que cela apparaît sur la figure 1, ces moyens anti-gel 4 sont placés sur le circuit aller reliant la chambre 3 et les capteurs solaires thermiques ou, en d'autres termes, sur la branche aller du circuit 10 reliant le quatrième conduit et le troisième conduit débouchant dans la chambre 3.

Comme indiqué précédemment, le système de production d'eau chaude sanitaire selon l'invention utilise un seul et unique réseau ; en d'autres termes, il n'y a pas de réseau primaire séparé d'un réseau secondaire comme c'est le cas dans les solutions traditionnelles. Outre, le recours à un fluide caloporteur additionné d'un fluide anti-gel, la protection du réseau cheminant à l'extérieur est habituellement assurée par la mise en service périodique d'un circulateur en fonction de la température d'eau mesurée dans les capteurs solaires thermiques.

Selon le présent mode de réalisation de l'invention, le système anti-gel proposé est une sécurité ultime en mode de fonctionnement dégradé (circulateur hors service). Ce système est destiné à éviter la détérioration du circuit hydraulique sous l'effet du gel.

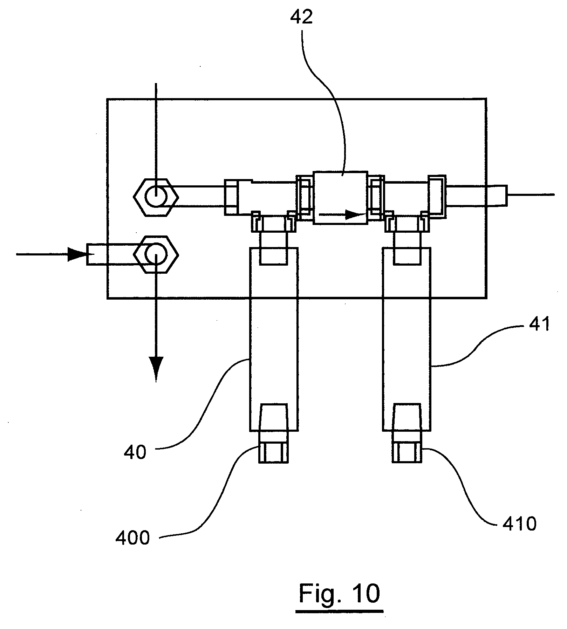

En référence à la figure 10, les moyens mécaniques anti-gel, destinés à éviter la formation de glace dans le circuit 10, comprennent :
- deux purgeurs thermostatiques 400, 410, destinés à éviter la détérioration du circuit 10 et des équipements raccordés à celui-ci sous l'effet du gel ; ces purgeurs sont raccordés aux extrémités des découpleurs thermiques décrits ci-après, au point bas de ceux-ci ;
- un clapet anti-retour 42, destiné en cas d'ouverture d'un des purgeurs thermostatiques à assurer une vidange maîtrisée du circuit ; ce clapet anti-retour est installé en série sur le circuit hydraulique, entre les deux purgeurs ;
- deux découpleurs thermiques 40, 41 : en matériau de type téflon ou similaire, ayant une bonne tenue à la pression, à la température, aux rayons ultra-violets, ayant une conductivité thermique supérieure aux canalisations isolées du réseau à proximité ; ces découpleurs sont destinés à protéger les purgeurs thermostatiques d'une température excessive, et en cas de température basse, à solliciter prématurément les purgeurs thermostatiques ; ces découpleurs thermiques sont raccordés en dérivation sur le circuit hydraulique, et sont installés verticalement sous la tuyauterie.

Le clapet des purgeurs thermostatiques est normalement fermé pour une température supérieure à 1°C.

A l'ouverture du purgeur 410, du côté des capteurs solaires thermiques, on vidange partiellement les capteurs solaires thermiques. L'ouverture du purgeur 400, du côté du conduit provenant de la chambre, entraîne la vidange de la canalisation « aller », s'étendant entre la chambre et le purgeur 40.

Le fonctionnement des moyens mécaniques anti-gel est le suivant :
- sous l'effet d'une température d'eau dans le découpleur thermique proche du point de congélation, le purgeur thermostatique correspondant s'ouvre ;
- le purgeur alors ouvert vidange une partie de l'eau dans l'installation ;
- l'eau s'évacuant du circuit d'eau chaude sanitaire est immédiatement remplacée par de l'eau du réseau d'eau potable sans perte de pression ; -,
- l'eau à température plus élevée arrive dans le découpleur thermique ; les purgeurs thermostatiques se ferment.

Ce cycle se prolonge tant que l'eau dans le découpleur est proche du point de congélation.

## Revendications

1. Système de production d'eau chaude, comprenant :
- au moins un capteur solaire (1) thermique à eau ;
- au moins un ballon (2) d'eau chaude ;
- des moyens intermédiaires reliés d'une part audit ou auxdits capteurs solaires (1) et, d'autre part, audit ballon d'eau chaude (2) de façon à alimenter ledit ballon en eau chaude,
les moyens intermédiaires comprenant une chambre (3) délimitant un volume (300) mettant en communication au moins quatre conduits :
- un premier conduit (30) de départ d'eau vers le ballon d'eau chaude, débouchant en partie supérieure de ladite chambre ;
- un deuxième conduit (31) d'arrivée d'eau, débouchant en partie inférieure de ladite chambre ;
- un troisième conduit (32) d'arrivée d'eau en provenance du ou des capteurs, débouchant dans une zone intermédiaire d'arrivée située entre la partie supérieure et la partie inférieure ;
- un quatrième conduit (33) de départ d'eau vers le ou les capteurs solaires, débouchant entre la partie inférieure et la zone intermédiaire d'arrivée,
**caractérisé en ce qu'**il comporte un moyen mécanique de stratification comprenant une vanne thermostatique (3010) placée sur le départ du premier conduit (30).

2. Système de production d'eau chaude selon la revendication 1, **caractérisé en ce que** ledit ballon (2) présente une extrémité supérieure (20) et **en ce que** ledit premier conduit (30) s'étend au-dessus de l'extrémité supérieure (20) du ballon d'eau chaude (2) et est relié à celle-ci.

3. Système de production d'eau chaude selon la revendication 2, **caractérisé en ce que** ledit ballon (2) présente un conduit d'alimentation (201) en eau chaude d'un réseau, ledit conduit s'étendant à partir de ladite extrémité supérieure.

4. Système de production d'eau chaude selon la revendication 1, **caractérisé en ce que** ledit ballon d'eau chaude (2) présente une extrémité inférieure (21) et **en ce que** le deuxième conduit (31) communique avec ladite extrémité inférieure (21) du ballon (2).

5. Système de production d'eau chaude selon l'une quelconque des revendications 1 à 4, **caractérisé en ce que** le troisième conduit (32) et/ou le quatrième conduit (33) pénètre dans ladite chambre (3) en partie supérieure (301) de celle-ci.

6. Système de production d'eau chaude selon l'une quelconque des revendications 1 à 4, **caractérisé en ce que** le troisième conduit (32) et/ou le quatrième conduit (33) pénètre dans ladite chambre en partie inférieure de celle-ci.

7. Système de production d'eau chaude selon l'une quelconque des revendications 1 à 6, **caractérisé en ce que** ledit troisième conduit (32) et ledit quatrième conduit (33) sont reliés par un circuit passant par ledit ou lesdits capteurs, ledit circuit incluant des moyens mécaniques anti-gel (4) destinés à éviter la formation de glace dans ledit circuit.

8. Système de production d'eau chaude selon la revendication 7, **caractérisé en ce que** lesdits moyens mécaniques anti-gel (4) intègrent des moyens de vidange du circuit activés à une température susceptible d'engendrer un état de solidification de l'eau, l'eau s'évacuant du circuit d'eau chaude sanitaire étant immédiatement remplacée par de l'eau du réseau d'eau potable sans perte de pression.

9. Système de production d'eau chaude selon l'une des revendications 7 et 8, **caractérisé en ce que** lesdits moyens mécaniques anti-gel (4) comprennent au moins un purgeur thermostatique (400 ; 410).

10. Système de production d'eau chaude selon la revendication 9, **caractérisé en ce que** le purgeur thermostatique (400 ; 410) est porté par un découpleur thermique (40 ; 41).

11. Système de production d'eau chaude selon l'une quelconque des revendications précédentes, **caractérisé en ce que** la vanne thermostatique (3010) est configurée pour être ouverte lorsque la température dans la partie supérieure (301) de la chambre est supérieure ou égale à 50°C.

## Patentansprüche

1. Warmwassererzeugungssystem, umfassend:
- mindestens einen Wassersolarkollektor (1);
- mindestens einen Warmwasserspeicher (2);
- Zwischenmittel, die einerseits mit dem oder den Wassersolarkollektoren (1) und andererseits mit dem Warmwasserspeichern (2) verbunden sind, um den Warmwasserspeicher mit warmem Wasser zu versorgen,
wobei die Zwischenmittel eine Kammer (3) aufweisen, die ein Volumen (300) begrenzt, das mindestens vier Rohrleitungen in Verbindung setzt:
- eine erste Rohrleitung (30) zur Wasserabführung zu dem Warmwasserspeicher, die im oberen Teil der Kammer mündet;
- eine zweite Rohrleitung (31) zur Wasserzuführung, die im unteren Teil der Kammer mündet;
- eine dritte Rohrleitung (32) zur Wasserzuführung aus dem oder den Wassersolarkollektoren, die in einem Zwischenbereichzuführung mündet, der zwischen dem oberen Teil und dem unteren Teil angeordnet ist;
- eine vierte Rohrleitung (33) zur Wasserabführung zu dem oder den Wassersolarkollektoren, die zwischen dem unteren Teil und dem oberen Zwischenbereichzuführung mündet,
**dadurch gekennzeichnet, dass** es ein mechanisches Mittel zur Schichtung aufweist, das ein Thermostatventil (3010) aufweist, das auf dem Austritt der ersten Rohrleitung (30) angeordnet ist.

2. Warmwassererzeugungssystem nach Anspruch 1, **dadurch gekennzeichnet, dass** der Speicher (2) ein oberes Ende (20) aufweist, und dass sich die erste Rohrleitung (30) über dem oberen Ende (20) des Warmwasserspeichers (2) erstreckt und mit diesem verbunden ist.

3. Warmwassererzeugungssystem nach Anspruch 2, **dadurch gekennzeichnet, dass** der Speicher (2) eine Rohrleitung (201) zur Warmwasserversorgung eines Netzes aufweist, wobei sich die Rohrleitung ausgehend von dem oberen Ende erstreckt.

4. Warmwassererzeugungssystem nach Anspruch 1, **dadurch gekennzeichnet, dass** der Warmwasserspeicher (2) ein unteres Ende (21) aufweist und dass die zweite Rohrleitung (31) mit dem unteren Ende (21) des Speichers (2) kommuniziert.

5. Warmwassererzeugungssystem nach einem der Ansprüche 1 bis 4, **dadurch gekennzeichnet, dass** die dritte Rohrleitung (32) und/oder die vierte Rohrleitung (33) in den oberen Teil (301) der Kammer (3) eindringt.

6. Warmwassererzeugungssystem nach einem der Ansprüche 1 bis 4, **dadurch gekennzeichnet, dass** die dritte Rohrleitung (32) und/oder die vierte Rohrleitung (33) in den unteren Teil der Kammer eindringt.

7. Warmwassererzeugungssystem nach einem der Ansprüche 1 bis 6, **dadurch gekennzeichnet, dass** die dritte Rohrleitung (32) und die vierte Rohrleitung (33) durch einen Kreislauf verbunden sind, der sich durch den oder die Wassersolarkollektoren hindurch erstreckt, wobei der Kreislauf mechanische Frostschutzmittel (4) aufweist, die dazu bestimmt sind, das Bilden von Eis in dem Kreislauf zu verhindern.

8. Warmwassererzeugungssystem nach Anspruch 7, **dadurch gekennzeichnet, dass** in den mechanischen Frostschutzmitteln (4) Mittel zum Entleeren des Kreislaufs enthalten sind, die bei einer Temperatur aktiviert werden, die dazu geeignet ist, einen Erstarrungszustand des Wassers zu erzeugen, wobei das Wasser, das aus dem Warmwasserkreislauf abfließt, sofort durch Wasser aus dem Trinkwassernetz ohne Druckverlust ersetzt wird.

9. Warmwassererzeugungssystem nach einem der Ansprüche 7 und 8, **dadurch gekennzeichnet, dass** die mechanischen Frostschutzmittel (4) mindestens einen thermostatischen Ablasshahn (400; 410) aufweisen.

10. Warmwassererzeugungssystem nach Anspruch 9, **dadurch gekennzeichnet, dass** der thermostatische Ablasshahn (400; 410) von einem Thermoschalter (40; 41) getragen wird.

11. Warmwassererzeugungssystem nach einem der vorhergehenden Ansprüche, **dadurch gekennzeichnet, dass** das Thermostatventil (3010) dazu konfiguriert ist, offen zu sein, wenn die Temperatur in dem oberen Teil (301) der Kammer 50 °C oder mehr beträgt.

## Claims

1. System for producing hot water, comprising:
- at least one water-type solar thermal collector (1);
- at least one hot water tank (2);
- intermediate means which are connected, on the one hand, to the said solar thermal collector or collectors (1) and, on the other hand, to the said hot water tank (2) so as to supply the said tank with hot water,
the intermediate means comprising a chamber (3) delimiting a volume (100) which brings at least four conduits into communication:
- a first conduit (30) for discharging water to the hot water tank, which conduit leading up to the upper part of the said chamber;
- a second water inlet conduit (31) leading up to the lower part of the said chamber;
- a third conduit (32) for admitting water coming from the collector or collectors, which conduit leading up to an intermediate inlet zone situated between the upper part and the lower part;
- a fourth conduit (33) for discharging water to the solar thermal collector or collectors, which conduit leadin up between the lower part and the intermediate inlet zone;
**characterised in that** it comprises a mechanical stratification means comprising a thermostatic valve (3010) located on the outlet of the first conduit (30).

2. System for producing hot water according to Claim 1, **characterised in that** the said tank (2) has an upper end (20), and **in that** the said first conduit (30) extends above the upper end (20) of the hot water tank (2) and is connected to this one.

3. System for producing hot water according to Claim 2, **characterised in that** the said tank (2) has a conduit (201) for supplying a network with hot water, the said conduit extending from the said upper end.

4. System for producing hot water according to Claim 1, **characterised in that** the said hot water tank (2) has a lower end (21), and **in that** the second conduit communicates with the said lower end (21) of the tank (2).

5. System for producing hot water according to any one of Claims 1 to 4, **characterised in that** the third conduit (32) and/or the fourth conduit (33) enter(s) the said chamber (3) at the upper part (301) of the latter.

6. System for producing hot water according to any one of Claims 1 to 4, **characterised in that** the third conduit (32) and/or the fourth conduit (33) enter(s) the said chamber (3) at the lower part of the latter.

7. System for producing hot water according to any one of Claims 1 to 6, **characterised in that** the said third conduit (32) and the said fourth conduit (33) are connected by a circuit which passes through the said collector or collectors, the said circuit including mechanical anti-freezing means (4) which are intended to avoid the formation of ice in the said circuit.

8. System for producing hot water according to Claim 7, **characterised in that** the said mechanical anti-freezing means (4) incorporate means for draining the circuit which are activated at a temperature which is liable to produce a state of solidification of the water, the water which is evacuated from the sanitary hot water circuit being immediately replaced by water from the drinking water network without loss of pressure.

9. System for producing hot water according to either of Claims 7 or 8, **characterised in that** the said mechanical anti-freezing means (4) comprise at least one thermostatic trap (400; 410).

10. System for producing hot water according to Claim 9, **characterised in that** the thermostatic trap (400; 410) is carried by a thermal decoupler (40; 41).

11. System for producing hot water according to any one of the preceding claims, **characterised in that** the thermostatic valve (3010) is configured so as to be open when the temperature in the upper part (301) of the chamber is greater than, or equal to, 50°C.
